# EUROPÄISCHE PATENTSCHRIFT

(11) **EP 0 496 922 B1**
(45) Veröffentlichungstag und Bekanntmachung des Hinweises auf die Patenterteilung: **03.04.1996**
(21) Anmeldenummer: 91101299.5
(22) Anmeldetag: 31.01.1991
(51) Int. Cl.: G06F 13/364, G06F 13/18

(54) **Verfahren und Schaltungsanordnung zur Steuerung der Daten- übertragung zwischen einem von mehreren Ein-/Ausgabemodulen und einer anderen Einheit einer Datenverarbeitungsanlage**
Method and circuit layout for control of the transmission of data between one of several input/output modules and another unit of a data processing system
Méthode et aménagement de circuit pour la commande de transmission de données entre une de plusieurs unités d'entrée/sortie et une autre unité d'un système de traitement de données

(43) Veröffentlichungstag der Anmeldung: 05.08.1992
(73) Patentinhaber: Siemens Nixdorf Informationssysteme Aktiengesellschaft, D-33102 Paderborn (DE)
(72) Erfinder: Backhaus, Werner, Dipl.-Phys., W-8000 München 70 (DE); Dietl, Erich, Dipl.-Ing., W-8200 Rosenheim (DE)
(74) Vertreter: Fuchs, Franz-Josef, Dr.-Ing.

(56) Entgegenhaltungen:
- EP-A- 0 034 903
- EP-A- 0 369 773
- EP-A- 0 378 195
- DE-A- 3 721 603
- GB-A- 2 166 930

## Beschreibung

Verfahren und Schaltungsanordnung zur Steuerung der Datenübertragung zwischen einem von mehreren an ein gemeinsames Leitungssystem angeschlossenen Ein-/Ausgabemodulen und einer anderen Einheit einer Datenverarbeitungsanlage

Die Erfindung betrifft ein Verfahren und eine Schaltungsanordnung zur Steuerung der Datenübertragung zwischen einem von mehreren an ein gemeinsames Leitungssystem angeschlossenen Ein-/ Ausgabemodulen und einer anderen Einheit einer Datenverarbeitungsanlage entsprechend dem Oberbegriff des Patentanspruchs 1 bzw. des Patentanspruchs 6.

Eine Datenverarbeitungsanlage besteht in herkömmlicher Weise aus zentralen Einheiten wie Verarbeitungseinheit, Arbeitsspeicher und gegebenenfalls selbständigem Ein-/Ausgabeprozessor sowie aus einer Reihe von Ein-/Ausgabemodulen zur Ansteuerung peripherer Geräte. Ein gemeinsames Ein-/Ausgabeleitungssystem, an das die zentralen Einheiten über eine Schnittstellensteuerung, die Ein-/Ausgabemodule hingegen direkt angeschlossen sind, dient zur Übertragung von Daten und Steuerinformationen zwischen den über die Ein-/Ausgabmodule erreichbaren peripheren Geräten und einer anderen Einheit der Datenverarbeitungsanlage, beispielsweise dem Arbeitsspeicher.

Anforderungen zur Durchführung von Informations- und Datenübertragungen werden dabei von allen Ein-/Ausgabemodulen an eine gemeinsame, mit dem Ein-/Ausgabeleitungssystem verbundene Steuereinrichtung gerichtet. Die Steuereinrichtung überwacht die von den einzelnen Ein-/Ausgabemodulen jeweils gestellten Anforderungen und wickelt den Datenverkehr zwischen einer sendenden und einer empfangenden Einheit in der einen oder anderen Richtung ab.

Die Benutzung eines gemeinsamen Übertragungsweges durch mehrere Ein-/Ausgabemodule bedingt die Überwachung der Anforderungen und die Auswahl einer Anforderung zur Ausführung bei mehreren gleichzeitig auftretenden Anforderungen. Für die Auswahl der einzelnen Anforderungen verwendet man beispielsweise ein Vorrangschema, wie es in der DE-A1-3 721 603 beschrieben ist. Dabei besteht für die Ein-/Ausgabemodule die Möglichkeit, Anforderungen mit unterschiedlichen Prioritätsstufen entsprechend der Dringlichkeit auszuführender Datenübertragungen an die Anforderungen überwachende Einheit zu richten.

Die Prioritätsstufe einer Anforderung ist dabei abhängig vom Füllungsgrad eines Pufferspeichers in den einzelnen Ein-/Ausgabemodulen, in dem die zu übertragenden Daten vor der Übertragung zwischengespeichert werden. Da die Gesamtmenge der jeweils zu übertragenden Daten schwanken kann, je Anforderung aber nur eine vorgegebene Datenmenge übertragen werden kann, sind zur Übertragung der jeweiligen Gesamtmenge die Anforderungen gegebenenfalls entsprechend zu vervielfachen. Bei größeren Datenmengen muß daher rechtzeitig mit der Weiterleitung der Daten aus dem Pufferspeicher begonnen werden, was durch die Erhöhung der Dringlichkeit einer Anforderung gesteuert wird.

Bei der Anordnung nach der US 3 399 384 ist zusätzlich ein Pufferspeicher an zentraler Stelle zwischen einem Arbeitsspeicher und einer gemeinsamen Kanalschnittstelle für mehrere Ein-/Ausgabekanäle vorgesehen, die gleichfalls Anforderungen mit unterschiedlichen Prioritätsstufen abhängig vom Ladezustand ihrer Schnittstellenregister stellen können. Der Pufferspeicher hat hierbei nur eine geringe Kapazität und liegt parallel zum direkten Übertragungspfad zwischen Arbeitsspeicher und Kanalschnittstelle in einem indirekten Übertragungspfad, wobei Anforderungen nur dann über den Pufferspeicher geleitet werden, wenn der direkte Übertragungspfad bereits für eine andere Anforderung freigegeben ist.

Weiterhin ist aus EP-A-O 369 773 eine Anordnung bekannt, bei der eine ausgewählte Anforderung von mehreren Prozessoren zur Übertragung von Daten aus einem Arbeitsspeicher an einen Pufferspeicher zur Weiterleitung an einen externen Speicher nur dann an den Arbeitsspeicher weitergeleitet wird, wenn der Füllungsstand des Pufferspeichers eine Übernahme der aus der Anforderung ersichtlichen Datenmenge noch zuläßt. In diesem Falle aber sind alle Anforderungen von gleicher Prioritätseinstufung, so daß eine Änderung der Annahmereihenfolge durch Änderung der Prioritätseinstufung entfällt.

Bei Datenverarbeitungsanlagen der eingangs genannten Art mit einem gemeinsamen Ein-/Ausgabeleitungssystem für eine Vielzahl von Ein-/Ausgabemodulen kann es bei der seriellen Abwicklung einer Vielzahl von anstehenden Datenübertragungen trotz Verwendung eines Pufferspeichers im gemeinsamen Übertragungsweg zu Schwierigkeiten kommen. Wenn nämlich die zu einer von der zentralen Steuereinrichtung angenommenen Anforderung eines Ein-/Ausgabemoduls gehörigen Dateneinheiten nicht rechtzeitig zum Arbeitsspeicher weitergeleitet werden können oder zeitliche Engpässe bei der Übertragung der vom Arbeitsspeicher bereitgestellten Dateneinheiten an die peripheren Geräte entstehen.

Um eine Weiterleitung durchzuführender Anforderungen in der Reihenfolge ihres Auftretens (Serialisierung) in möglichst kurzer Zeit zu erreichen, wird für den Pufferspeicher eine möglichst geringe Speichertiefe gefordert. Demgegenüber ist zur Erzielung einer möglichst hohen Datenübertragungsrate und somit zur Steigerung der Verarbeitungsleistung der Datenverarbeitungsanlage eine hohe Speicherkapazität mit einer Vielzahl von Einträgen wünschenswert.

Eine optimale Ausrichtung der Anlage entsprechend der einen oder anderen Zielsetzung führt zu keinem für beide Alternativen zufriedenstellenden Ergebnis und somit zu keinem besonders effektiven Arbeiten der Anlage. Daher ist es Aufgabe der Erfindung, ein Verfahren und eine Schaltungsanordnung zur Steuerung der Übertragung von Daten und Steuerinformationen zu schaffen, durch das bzw. die die Abwicklung auszuführender Datenübertragungen unterschiedlicher Dringlichkeit verbessert und somit die Leistung der Anlage insgesamt gesteigert wird.

Diese Aufgabe wird hinsichtlich des Verfahrens gemäß der Erfindung durch die kennzeichnenden Merkmale des Patentanspruchs 1 gelöst.

Danach besteht abweichend von den bisher üblichen Lösungen für die Steuereinrichtung die Möglichkeit, nur noch Anforderungen der höchsten Dringlichkeitsstufe bis zum Erreichen der maximal zulässigen Anzahl von Anforderungen anzunehmen, sobald die Dateneinheiten für eine vorgegebene niedrigere Anzahl von Anforderungen in den Pufferspeicher eingetragen sind. Anforderungen einer niedrigeren Dringlichkeitsstufe werden von der Steuereinrichtung solange abgewiesen, bis der vorgegebene Grenzwert durch Weiterleitung gespeicherter Dateneinheiten wieder unterschritten wird. Somit wird die Anzahl der angenommenen Anforderungen und der damit im Pufferspeicher hinterlegten Dateneinheiten nicht einheitlich festgelegt, sondern sie variiert bei vorgegebenem Grenzwert in Abhängigkeit von der Dringlichkeit auszuführender Datenübertragungen.

Bei Verwendung individueller Anforderungsleitungen für die einzelnen Dringlichkeitsstufen brauchen gemäß einer Weiterbildung der Erfindung die Anforderungsleitungen für die niedrigeren Dringlichkeitsstufen nach Erreichen des Grenzwertes nicht mehr überwacht zu werden, was bei der Abwicklung weiterer Anforderungen von Vorteil ist.

Bei Verwendung gemeinsamer Anforderungsleitungen kann gemäß einer anderen Weiterbildung der Erfindung zwischen den jeweiligen Dringlichkeitsstufen einer Anforderung durch Bereitstellung gesonderter Kennzeichen in einer zu übertragenden Steuerinformation unterschieden werden, anhand der dann eine vorläufig angenommene Anforderung endgültig angenommen oder abgewiesen wird.

Eine entsprechende Anordnung gemäß der Erfindung ergibt sich aus den Merkmalen des Patentanspruchs 6. In der Steuereinrichtung ist eine Schaltung vorgesehen, durch die bei Erreichen bzw. Unterschreiten des vorgegebenen Grenzwertes das Setzen bzw. Rücksetzen eines internen Steuersignals möglich ist. Gekoppelt ist die Schaltung mit einer Einrichtung, von der abhängig vom Zustand des internen Steuersignals die Annahme weiterer Anforderungen der höchsten Dringlichkeitsstufe oder die Zurückweisung von Anforderungen einer niedrigeren Dringlichkeitsstufe durch entsprechende Steuersignale für die Ein-/Ausgabemodule mitgeteilt wird.

Weitere Patentansprüche beziehen sich auf Mittel zur Auswertung der Anforderungen bei Verwendung individueller Anforderungsleitungen bzw. auf die Übertragung gesonderter Kennzeichen für die Festlegung der unterschiedlichen Dringlichkeitsstufen einer Anforderung bei Verwendung gemeinsamer Anforderungsleitungen, sowie auf die Ausbildungen der Schaltung zur Erzeugung des internen Steuersignals und des Pufferspeichers.

Die Erfindung wird nachfolgend anhand eines in der Zeichnung dargestellten Ausführungsbeispiels näher erläutert. Im einzelnen zeigen
FIG 1 ein Blockschaltbild eines Teils einer Datenverarbeitungsanlage mit an ein gemeinsames Ein-/Ausgabeleitungssystem angeschlossenen Ein-/Ausgabemodulen und einer Steuereinrichtung, und
FIG 2 ein Blockschaltbild zur Erläuterung der Zusammenarbeit zwischen einem Ein-/Ausgabemodul und der Steuereinrichtung bei der Abwicklung einer Datenübertragung.

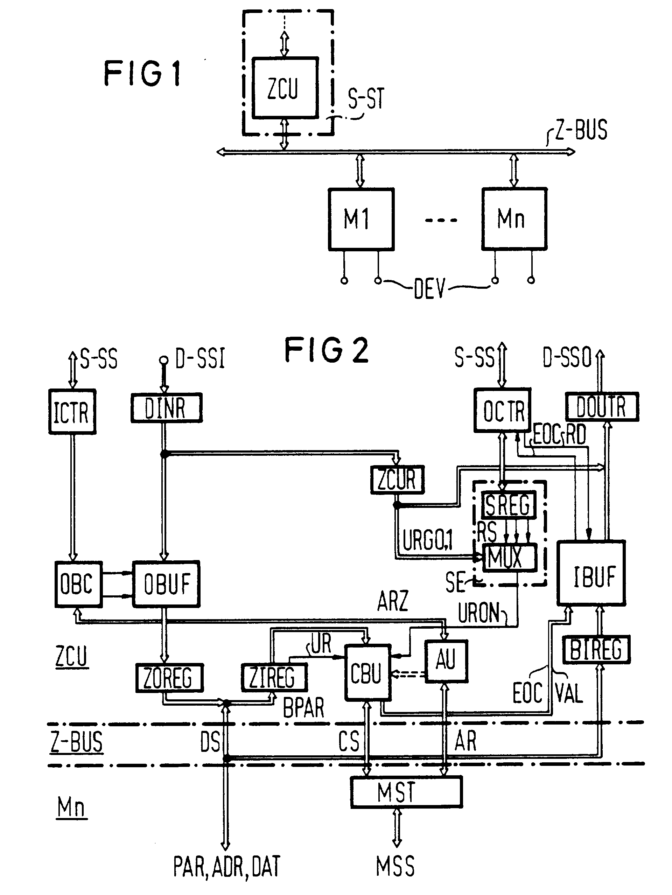

Der in FIG 1 dargestellte Teil einer Datenverarbeitungsanlage umfaßt ein Ein-/Ausgabeleitungssystem Z-BUS, an das eine Reihe von selbständigen Ein-/Ausgabemodulen M1...Mn zur Ansteuerung peripherer Geräte DEV angeschlossen sind. Anforderungen der Ein-/Ausgabemodule M1...Mn für die Durchführung einer Übertragung von Daten und Steuerinformationen werden an eine ebenfalls mit dem Leitungssystem Z-BUS verbundene Steuereinrichtung ZCU gerichtet, die beispielsweise Bestandteil einer Schnittstellensteuerung S-ST sein kann.

Über die Schnittstellensteuerung S-ST ist in bekannter Weise die Anbindung zentraler Einheiten einer Datenverarbeitungsanlage möglich, mit denen jeweils ein Daten- und Informationstransfer stattfindet. So ist beispielsweise der Übertragungsweg zwischen einem der Ein-/Ausgabemodule M1...Mn und einem nicht dargestellten Arbeitsspeicher als einer zentralen Einheit der Datenverarbeitungsanlage herstellbar, an den dann Lese- oder Schreibzugriffe weitergeleitet werden.

FIG 2 zeigt Teile eines Ein-/Ausgabemoduls Mn und der Steuereinrichtung ZCU mit den für die Erläuterung der Erfindung notwendigen Steuer- und Datenleitungen des Leitungssystems Z-BUS, um Anforderungen zur Durchführung von Datenübertragungen abwickeln zu können.

Die Steuereinrichtung ZCU ist zu diesem Zweck mit jedem Ein-/Ausgabemodul, z.B. Mn, am Leitungssystem Z-BUS mit Anforderungsleitungen AR verbunden. Im gewählten Ausführungsbeispiel werden die Leitungen AR von allen Modulen gemeinsam benutzt und können von ihnen zu bestimmten Zeitpunkten aktiviert werden. Mit ihnen bewerben sich die Module um Zuteilung des Leitungssystems Z-BUS zur Durchführung einer Datenübertragung jeweils in Verbindung mit Aufschalten einer Auswahlinformation, die eine jedem Modul starr zugeordnete Prioritätsinformation für die Zuteilung enthält. Die höchste Priorität aller mit dem Leitungssystem Z-BUS gekoppelten Teilnehmer besitzt die Steuereinrichtung ZCU. Sie äußert den Wunsch auf Benutzung des Leitungssystems durch Abgabe interner Anforderungssignale ARZ an eine mit dem Leitungssystem verbundene Einrichtung AU, die anhand der vorliegenden Prioritätskennung eine Zuteilungsentscheidung trifft.

Jedes Ein-/Ausgabemodul weist eine Steuerung MST auf, über die die gemeinsamen Anforderungsleitungen AR angesteuert werden. Sobald die Anforderung eines Moduls von der Steuereinrichtung ZCU mit Zuteilung des Leitungssystems Z-BUS angenommen ist, wird die Steuerung MST aktiv und beschaltet mit Hilfe der modulinternen Steuersignale MSS die Datenleitungen DS mit den zur Anforderung gehörigen Dateneinheiten.

In einer ersten Phase werden dabei Steuerinformationen BPAR angelegt und nach Übertragung über die Datenleitungen DS in einem Eingangsregister ZIREG der Steuereinrichtung ZCU zwischengespeichert. Diese Steuerinformationen bestehen aus einem Parameterwort, in dem die Zieladresse des Empfängers für die Aufnahme der nachfolgenden, zur angenommenen Anforderung gehörigen Dateneinheiten angegeben ist. Wegen der abzuwickelnden Datenübertragungen zwischen jeweils einem Modul und dem Arbeitsspeicher handelt es sich bei der Zieladresse immer um die der Steuereinrichtung ZCU.

Weiterhin enthält das Parameterwort gesonderte Kennzeichen UR, anhand der die Art der vorläufig angenommenen Anforderung feststellbar ist. Die Ein-/Ausgabemodule M1...Mn können nämlich Anforderungen mit unterschiedlichen Dringlichkeitsstufen an die Steuereinrichtung ZCU richten, wobei die einzelnen Dringlichkeitsstufen beispielsweise abhängig von Echtzeitanforderungen der angeschlossenen Peripheriegeräte an die Durchführung einer Übertragung einstellbar sind. Die Überwachung der gesonderten Kennzeichen UR erfolgt in einer Einrichtung CBU, von der Steuerleitungen CS des Leitungssystems Z-BUS mit Steuersignalen für die weitere Abwicklung der ausgelösten Anforderung beschaltet werden.

Für den Fall, daß von der Einrichtung CBU der Steuerung MST im anfordernden Modul Mn die endgültige Annahme der Anforderung angezeigt wird, folgt auf die erste Phase eine weitere Übertragungssequenz. In ihr werden aufeinanderfolgend die restlichen Dateneinheiten der angenommenen Anforderung, nämlich weitere Steuerinformationen PAR, eine Arbeitsspeicheradresse ADR sowie für den Fall eines Schreibzugriffs die Daten DAT, über die Datenleitungen DS übertragen. Dazu können je nach Datenumfang der Anforderung eine unterschiedliche Anzahl von Zyklen auf dem Leitungssystem Z-BUS benötigt werden. Gesteuert wird die Übertragung der einzelnen Dateneinheiten durch die Steuerleitungen CS, die von der Steuerung MST und der Steuereinrichtung CBU abwechselnd belegt werden, so daß die Dateneinheiten im "handshake"-Verfahren vom Modul Mn an die Steuereinrichtung ZCU übergeben werden.

Die jeweiligen Dateneinheiten werden nach Zwischenspeicherung in einem Speichereingangsregister BIREG der Steuereinrichtung ZCU in einen Pufferspeicher IBUF übernommen. Ein Speichereintrag besteht dabei aus allen Dateneinheiten PAR, ADR und eventuell DAT einer angenommenen Anforderung und aus zwei zusätzlichen Steuerinformationen EOC, VAL, deren Speicherung von der Einrichtung CBU veranlaßt wird. Das Signal EOC gibt die letzte Dateneinheit der Anforderung an, während das Signal VAL die Gültigkeit des gesamten Eintrags kennzeichnet.

Mit dem Pufferspeicher IBUF ist eine Ausgangssteuerung OCTR verbunden. Sobald die Dateneinheiten der ersten angenommenen Anforderung vollständig vorliegen, erkennbar am Signal EOC, bewirkt die Ausgangssteuerung OCTR das Eintragen einer 1 in die erste Speicherstelle eines mit ihr gekoppelten Schieberegisters SREG. Nach Eintragung der Dateneinheiten für jede weitere angenommene Anforderung in den Pufferspeicher IBUF wird der Registerinhalt jeweils in einer Richtung, beispielsweise beginnend an der ersten Speicherstelle von links nach rechts, verschoben und eine 1 in die erste Speicherstelle eingetragen, während bei Entnahme der zu einer Anforderung gehörigen und im Pufferspeicher IBUF gespeicherten Dateneinheiten jeweils die Verschiebung des Registerinhalts in der umgekehrten Richtung, also beispielsweise von rechts nach links, und die Speicherung einer 0 in der letzten Speicherstelle des Registers SREG erfolgt.

Der Pufferspeicher IBUF ist als Durchlaufspeicher ausgebildet, der mit den unabhängig voneinander arbeitenden Steuerungen OCTR bzw. CBU für die Weiterleitung der gespeicherten Anforderungen in der Reihenfolge ihrer Annahme bzw. für die Eintragung weiterer Anforderungen in den Speicher IBUF gekoppelt ist. Die Ausgangssteuerung OCTR kann mit dem Signal RD die Weiterleitung bereits auslösen, wenn mindestens ein Speichereintrag vollständig vorliegt. Die Veränderung des Registerinhalts in der einen oder anderen Richtung findet dabei unter Berücksichtigung nachfolgender Eintragungen in den Pufferspeicher IBUF statt, so daß im Schieberegister SREG zu jedem Zeitpunkt die Anzahl der im Pufferspeicher IBUF hinterlegten Anforderungen enthalten ist.

Die Speicherkapazität des Pufferspeichers IBUF wird so gewählt, daß die Dateneinheiten einer vorgegebenen maximalen Anzahl von Anforderungen gespeichert werden können. Bei Vorgabe einer maximal zulässigen Anzahl von beispielsweise acht Anforderungen weist das Schieberegister SREG folglich eine entsprechende Anzahl von acht Speicherstellen auf. Da die maximale Pufferspeicherkapazität nicht immer ausgenutzt werden soll, sind in der Steuereinrichtung ZCU Mittel vorgesehen, die die Annahme weiterer Anforderungen und somit die Speicherung nachfolgender Dateneinheiten abhängig von der Dringlichkeit der auszuführenden Datenübertragungen steuern.

Nach der Eintragung der Dateneinheiten für eine vorgegebene Anzahl von Anforderungen als Grenzwert, der niedriger als die maximal zulässige Anzahl ist, werden Anforderungen von der Einrichtung CBU nur noch eingeschränkt angenommen. Im gewählten Ausführungsbeispiel mit maximal acht Anforderungen kann der Grenzwert beispielsweise auf zwei, vier oder sechs Anforderungen eingestellt werden. Dies hat zur Folge, daß die zweite, vierte und sechste Speicherstelle des Schieberegisters SREG mit einem nachgeschalteten Auswahlschalter MUX verbunden sind, so daß die aus den Speicherstellen ausgelesenen Signale RS jeweils entweder eine 1 oder eine 0 abhängig von den entsprechend der Anzahl der insgesamt im Pufferspeicher IBUF gespeicherten Anforderungen eingetragenen Werte führen.

Welches der Signale RS als internes Steuersignal URON an den Ausgang des Auswahlschalters MUX durchgeschaltet wird, veranlassen die Auswahlsignale URGO,1, die eine Information über den eingestellten Grenzwert und damit die zu berücksichtigende Speicherstelle des Registers SREG enthalten. Ist also die vorgegebene niedrigere Anzahl von Anforderungen erreicht, so befindet sich das interne Steuersignal URON im gesetzten Zustand (URON=1), ansonsten im rückgesetzten Zustand (URON=0).

Das von der Schaltung SE erzeugte interne Steuersignal URON bildet ein Eingangssignal für eine Einrichtung CBU zur Bereitstellung von Steuersignalen für die endgültige Annahme oder die Zurückweisung einer vorläufig angenommenen Anforderung. Zu diesem Zweck sind in der Einrichtung CBU Mittel zur Auswertung der in den Steuerinformationen BPAR übertragenen gesonderten Kennzeichen UR vorgesehen. Diese Mittel können beispielsweise eine Dekodiereinrichtung zur Ermittlung der einzelnen, binär codierten Dringlichkeitsstufen einer Anforderung und einfache UND- bzw. ODER-Glieder zur Verknüpfung mit dem empfangenen internen Steuersignal URON umfassen.

Die Steuereinrichtung CBU beschaltet folglich die Steuerleitungen CS mit Steuersignalen entsprechend dem Auswerteergebnis. Dabei wird von der Steuerung MST im Modul Mn die Übertragung nachfolgender, zur Anforderung gehöriger Dateneinheiten angestoßen, falls bei gesetztem internen Steuersignal (URON=1) anhand der ausgewerteten Kennzeichen UR eine Anforderung höchster Dringlichkeitsstufe vorliegt, oder ansonsten vereitelt. Somit ist der Füllungsgrad des Pufferspeichers IBUF von Anforderungen der höchsten Dringlichkeit abhängig, so daß seine maximale Speicherkapazität nicht immer ausgeschöpft sein muß.

Die Tatsache, daß nach jeder Weiterleitung der zu einer Anforderung gehörigen und im Pufferspeicher IBUF gespeicherten Dateneinheiten der Inhalt des Schieberegisters SREG von der Ausgangssteuerung OCTR entsprechend verändert wird, kann zum Unterschreiten des vorgegebenen Grenzwertes und somit wieder zur Annahme von Anforderungen niedrigerer Dringlichkeitsstufen durch die Steuereinrichtung ZCU führen. In diesem Fall weist das interne Steuersignal URON den zurückgesetzten Zustand (URON=0) auf.

In gleicher Weise wie oben beschrieben erfolgt die Abwicklung von durchzuführenden Datenübertragungen in Abhängigkeit ihrer jeweiligen Dringlichkeit, wenn für die einzelnen Dringlichkeitsstufen individuelle Anforderungsleitungen AR verwendet werden. Einer Übertragung gesonderter Kennzeichen bedarf es nicht, jedoch sind für die Auswertung der individuellen Anforderungsleitungen gleicher Dringlichkeitsstufe jeweils gesonderte Mittel vorgesehen.

Sie können ebenfalls in der Einrichtung CBU angeordnet sein, wobei dann die Leitungen AR von der Einrichtung AU in einfacher Weise an die Einrichtung CBU durchgeschaltet sind. Bei gesetztem internen Steuersignal (URON=1) sind die gesonderten Mittel für die Auswertung der Anforderungsleitungen niedrigerer Dringlichkeitsstufen gesperrt, so daß nur die Mittel für die Überwachung der Anforderungsleitungen der höchsten Dringlichkeit aktiv bleiben. Die gesonderten Mittel können jeweils aus UND- bzw. ODER-Gliedern zur Verknüpfung der auf den einzelnen Anforderungsleitungen verlaufenden Signale mit dem internen Steuersignal URON bestehen.

Für die vollständige Abwicklung der durch die endgültige Annahme der Anforderung durchzuführenden Datenübertragung werden die im Pufferspeicher IBUF abgelegten Dateneinheiten in ein Speicherausgangsregister DOUTR eingeschrieben und über den Datenausgangspfad D-SSO Einrichtungen an der Schnittstelle zum Arbeitsspeicher übergeben. Die Steuerung der Übergabe der Daten und Steuerinformationen einer weiterzuleitenden Anforderung erfolgt durch die Ausgangssteuerung OCTR, die hierzu entsprechende Schnittstellensignale S-SS empfängt und aussendet.

Beinhaltet die Anforderung einen Lesezugriff auf den Arbeitsspeicher, so werden die angeforderten und vom Arbeitsspeicher gelieferten Dateneinheiten in einem Dateneingangsregister DINR der Steuereinrichtung ZCU zwischengespeichert. Den Ablauf für die Bereitstellung steuern wiederum Schnittstellensignale S-SS, die von einer Eingangssteuerung ICTR gesendet bzw. empfangen werden. Den zu übertragenden Daten werden Steuerinformationen vorausgeschickt, in denen u.a. die Adresse des anfordernden Moduls angegeben ist.

Zur Speicherung der gelieferten Dateneinheiten in der Steuereinrichtung ZCU dient ein beispielsweise aus zwei Speicherbänken bestehender Wechselpufferspeicher OBUF, wobei die Inhalte der Bänke jeweils mit Hilfe einer Reihe von Latches über Multiplexeinrichtungen auslesbar sind. Nach Mindestfüllung einer Speicherbank mit den Steuerinformationen und den angeforderten Lesedaten wenigstens einer Anforderung kann mit der Ausgabe der Daten überlappend zur Eintragung weiterer Dateneinheiten in den Wechselpufferspeicher OBUF begonnen werden.

Zuvor wird jedoch von einer Wechselpufferspeichersteuerung OBC um Zuteilung des Leitungssystems Z-BUS gebeten, wobei die internen Anforderungsleitungen ARZ der Steuereinrichtung ZCU, die die höchste Prioritätskennung aller am Leitungssystem angeschlossenen Teilnehmer besitzt, aktiviert werden. Hat die Steuereinrichtung ZCU die Zuteilung gewonnen, so beschaltet sie die Datenleitungen DS, von denen die zuvor in das Ausgangsregister ZOREG ausgelagerten Dateneinheiten zum anfordernden Modul Mn übertragen werden.

Auf dem Übertragungsweg vom Arbeitsspeicher zu den jeweiligen Modulen kommt es auch zur Übergabe zusätzlicher Informationen. So kann beispielsweise ein in der Steuereinrichtung ZCU angeordnetes Steuerregister ZCUR mit Daten geladen werden, aus denen die Auswahlinformationen URGO,1 abgeleitet werden. Auf diese Weise kann eine Änderung des von einer anderen Einheit der Datenverarbeitungsanlage, beispielsweise der Verarbeitungseinheit, vorgegebenen Grenzwertes unmittelbar an die Schaltung SE zur Erzeugung des internen Steuersignals URON weitergegeben werden.

## Patentansprüche

1. Verfahren zur Steuerung der Datenübertragung zwischen einem von mehreren an ein Leitungssystem (Z-BUS) angeschlossenen Ein-/Ausgabemodulen (M1...Mn) und einer anderen Einheit einer Datenverarbeitungsanlage, bei dem von den einzelnen Ein-/Ausgabemodulen (M1...Mn) Anforderungen mit unterschiedlichen Dringlichkeitsstufen an eine mit dem gemeinsamen Leitungssystem (Z-BUS) verbundene zentrale Steuereinrichtung (ZCU) gestellt werden, die auch die Übertragung der zu einer Anforderung jeweils gehörigen Daten (DAT) und Steuerinformationen (BPAR, PAR,ADR) abwickelt, wobei die zu übertragenden Dateneinheiten nach einer angenommenen Anforderung jeweils in einen Pufferspeicher (IBUF) der zentralen Steuereinrichtung (ZCU) eingetragen werden, der eine dem Datenumfang einer vorgegebenen maximalen Anzahl von Anforderungen entsprechende Speicherkapazität aufweist, **dadurch gekennzeichnet**, daß nach Eintragung der Dateneinheiten für eine vorgegebene niedrigere Anzahl von Anforderungen als Grenzwert nur noch weitere Anforderungen der höchsten Dringlichkeitsstufe bis zum Erreichen der maximal zulässigen Anzahl von Anforderungen von der zentralen Steuereinrichtung (ZCU) angenommen werden, während Anforderungen einer niedrigeren Dringlichkeitsstufe solange abgewiesen werden, bis der vorgegebene Grenzwert durch Weiterleitung der zu einer angenommenen Anforderung gehörigen und im Pufferspeicher (IBUF) gespeicherten Dateneinheiten wieder unterschritten wird.

2. Verfahren nach Anspruch 1, **dadurch gekennzeichnet**, daß bei Verwendung individueller Anforderungsleitungen für die einzelnen Dringlichkeitsstufen die Überwachung der Anforderungsleitungen der niedrigeren Dringlichkeitsstufen nach Erreichen des Grenzwertes ausgesetzt wird.

3. Verfahren nach Anspruch 1, **dadurch gekennzeichnet**, daß bei Verwendung gemeinsamer Anforderungsleitungen (AR) die jeweilige Dringlichkeitsstufe einer Anforderung anhand gesonderter Kennzeichen (UR) in der nach der vorläufigen Annahme jeder Anforderung übertragenen Steuerinformation (BPAR) festgestellt und davon abhängig die Anforderung endgültig angenommen oder abgewiesen wird.

4. Verfahren nach einem der Ansprüche 1 bis 3, **dadurch gekennzeichnet**, daß parallel zum Eintragen der zu einer angenommenen Anforderung gehörigen Dateneinheiten jeweils ein Gültigkeitszeichen (VAL) und ein Steuerzeichen (EOC) zur Kennzeichnung der letzten Dateneinheit der Anforderung im Pufferspeicher (IBUF) gespeichert werden.

5. Verfahren nach Anspruch 4, **dadurch gekennzeichnet**, daß mit der Weiterleitung der im Pufferspeicher (IBUF) gespeicherten Dateneinheiten begonnen wird, sobald wenigstens die zu einer angenommenen Anforderung gehörigen Dateneinheiten vollständig im Speicher vorliegen.

6. Schaltungsanordnung zur Steuerung der Übertragung von Daten (DAT) und Steuerinformationen (BPAR,PAR,ADR) zwischen einem von mehreren Ein-/Ausgabemodulen (M1...Mn) und einer anderen Einheit einer Datenverarbeitungsanlage, mit einem Leitungssystem (Z-BUS), an das eine zentrale Steuereinrichtung (ZCU) und die Ein-/Ausgabemodule (M1..,Mn) angeschlossen sind, die über Anforderungsleitungen zum Stellen von Anforderungen unterschiedlicher Dringlichkeitsstufen mit der zentralen Steuereinrichtung (ZCU) verbunden sind, und mit einem in der zentralen Steuereinrichtung (ZCU) für die Speicherung der zu einer angenommenen Anforderung gehörigen Dateneinheiten vorgesehenen Pufferspeicher (IBUF), der eine dem Datenumfang einer vorgegebenen maximalen Anzahl von Anforderungen entsprechende Speicherkapazität aufweist, **dadurch gekennzeichnet**, daß in der zentralen Steuereinrichtung (ZCU) eine Schaltung (SE) zur Erzeugung eines internen Steuersignals (URON) vorgesehen ist, das nach Speicherung der Dateneinheiten für eine vorgegebene niedrigere Anzahl von Anforderungen als Grenzwert setzbar und nach Unterschreiten dieser vorgegebenen Anzahl infolge Weiterleitung gespeicherter Dateneinheiten wieder rücksetzbar ist, und daß mit der Schaltung (SE) eine Einrichtung (CBU) zur Bereitstellung von Steuersignalen (CS) für die Ein-/Ausgabemodule gekoppelt ist, durch die bei gesetztem internen Steuersignal (URON=1) die Annahme von Anforderungen der höchsten Dringlichkeitsstufe bis zum Erreichen der maximal zulässigen Anzahl von Anforderungen oder die Zurückweisung von Anforderungen einer niedrigeren Dringlichkeitsstufe mitteilbar ist.

7. Schaltungsanordnung nach Anspruch 6, **dadurch gekennzeichnet,** daß bei Verwendung einer der Anzahl der unterschiedlichen Dringlichkeitsstufen entsprechenden Anzahl von individuellen Anforderungsleitungen die Einrichtung (CBU) zur Bereitstellung der Steuersignale (CS) jeweils gesonderte Mittel zur Auswertung der Anforderungsleitungen gleicher Dringlichkeitsstufe aufweist, von denen die Mittel zur Auswertung der Anforderungsleitungen niedrigerer Dringlichkeitsstufen bei gesetztem internen Steuersignal (URON=1) gesperrt sind.

8. Schaltungsanordnung nach Anspruch 6, **dadurch gekennzeichnet,** daß bei Verwendung gemeinsamer Anforderungsleitungen (AR) von den einzelnen Ein-/Ausgabemodulen (z.B. Mn) gesonderte Kennzeichen (UR) für die Festlegung der unterschiedlichen Dringlichkeitsstufen einer Anforderung in der nach vorläufiger Annahme jeder Anforderung übertragenen Steuerinformation (BPAR) an die Einrichtung (CBU) zur Bereitstellung von Steuersignalen (CS) übertragbar sind, und daß die Einrichtung (CBU) Mittel zur Auswertung der übertragenen Kennzeichen (UR) aufweist, von denen die für die endgültige Annahme oder die Zurückweisung von Anforderungen vorgesehenen Steuersignale (CS) in Abhängigkeit vom Zustand des internen Steuersignals (URON) ableitbar sind.

9. Schaltungsanordnung nach einem der Ansprüche 6 bis 8, **dadurch gekennzeichnet**, daß die Schaltung (SE) zur Erzeugung des internen Steuersignals (URON) ein Schieberegister (SREG) mit einer der maximal zulässigen Anzahl von Anforderungen entsprechenden Anzahl von Speicherstellen aufweist, in die nach jedem Eintragen der zu einer angenommenen Anforderung gehörigen Dateneinheiten in den Pufferspeicher (IBUF) in einer Schieberichtung ein Wert eingeschrieben und nach Weiterleitung der zu einer Anforderung gehörigen und im Pufferspeicher (IBUF) gespeicherten Dateneinheiten in der entgegengesetzten Schieberichtung wieder gelöscht wird, und daß von ausgewählten Speicherstellen des Registers (SREG), die jeweils die Eintragung einer vorgegebenen niedrigeren Anzahl von Anforderungen als Grenzwert anzeigen, Signale (RS) mit den jeweils gespeicherten Werten einem Auswahlschalter (MUX) zugeführt sind, von dem eines der Signale als internes Steuersignal (URON) an dessen Ausgang durchschaltbar ist.

10. Schaltungsanordnung nach einem der Ansprüche 6 bis 9, **dadurch gekennzeichnet**, daß der Pufferspeicher (IBUF) als Durchlaufspeicher ausgebildet ist, der mit voneinander unabhängig arbeitenden Steuerungen (OCTR,CBU) für die Weiterleitung gespeicherter Dateneinheiten und für die Eintragung weiterer Dateneinheiten gekoppelt ist.

## Claims

1. Method for controlling the transmission of data between one of several input/output modules (M1...Mn) connected to a line system (Z-BUS) and another unit of a data processing system, in which requests having different priority levels are submitted by the individual input/output modules (M1...Mn) to a central control unit (ZCU) connected to the shared line system (Z-BUS), which central control unit also handles the transmission of the data (DAT) and control information (BPAR, PAR, ADR) respectively associated with a request, the data units to be transmitted being entered, after a request has been accepted, in each case into a buffer memory (IBUF) of the central control unit (ZCU) which has a storage capacity corresponding to the data volume of a predetermined maximum number of requests, characterized in that, after the data units for a predetermined lower number of requests as a limit value have been entered, only further requests having the highest priority level are accepted by the central control unit (ZCU) until the maximum permissible number of requests has been reached, while requests having a lower priority level are rejected until the number falls below the predetermined limit value again as a result of forwarding of the data units associated with an accepted request and stored in the buffer memory (IBUF).

2. Method according to Claim 1, characterized in that if individual request lines are used for the individual priority levels, monitoring of the request lines of the lower priority levels is suspended once the limit value is reached.

3. Method according to Claim 1, characterized in that if shared request lines (AR) are used, the respective priority level of a request is determined on the basis of special identifiers (UR) in the control information (BPAR) transmitted after the provisional acceptance of each request and the request is finally accepted or rejected on the basis thereof.

4. Method according to one of Claims 1 to 3, characterized in that, parallel to the entry of the data units associated with an accepted request, in each case one validity character (VAL) and one control character (EOC) are stored in the buffer memory (IBUF) for indicating the last data unit of the request.

5. Method according to Claim 4, characterized in that the forwarding of the data units stored in the buffer memory (IBUF) commences as soon as at least the data units associated with an accepted request are all present in the memory.

6. Circuit layout for controlling the transmission of data (DAT) and control information (BPAR, PAR, ADR) between one of several input/output modules (M1...Mn) and another unit of a data processing system, having a line system (Z-BUS) to which a central control unit (ZCU) and the input/output modules (M1...Mn) are connected, which modules are connected via request lines for submitting requests having different priority levels to the central control unit (ZCU), and having a buffer memory (IBUF) provided in the central control unit (ZCU) for storing the data units associated with an accepted request, which buffer memory has a storage capacity corresponding to the data volume of a predetermined maximum number of requests, characterized in that a circuit (SE) for generating an internal control signal (URON) is provided in the central control unit (ZCU), which signal can be set as a limit value after storage of the data units for a predetermined lower number of requests and can be reset again after the number falls below this predetermined number as a result of the forwarding of stored data units, and in that a unit (CBU) for supplying control signals (CS) for the input/output modules is coupled to the circuit (SE), by means of which unit, when the internal control signal (URON=1) is set, it is possible to signal the acceptance of requests having the highest priority level until the maximum permitted number of requests has been reached or the rejection of requests having a lower priority level.

7. Circuit layout according to Claim 6, characterized in that, given the use of a number of individual request lines corresponding to the number of different priority levels, the unit (CBU) for supplying the control signals (CS) has in each case separate means for evaluating the request lines having the same priority level, of which the means for evaluating the request lines having lower priority levels are disabled when the internal control signal (URON=1) is set.

8. Circuit layout according to Claim 6, characterized in that, given the use of shared request lines (AR), separate identifiers (UR) for specifying the different priority levels of a request can be transmitted by the individual input/output modules (e.g. Mn) to the unit (CBU) for supplying control signals (CS) in the control information (BPAR) transmitted after the provisional acceptance of each request, and in that the unit (CBU) has means for evaluating the transmitted identifiers (UR), from which the control signals (CS) provided for the final acceptance or the rejection of requests can be derived depending on the state of the internal control signal (URON).

9. Circuit layout according to one of Claims 6 to 8, characterized in that the circuit (SE) for generating the internal control signal (URON) has a shift register (SREG) having a number of storage locations corresponding to the maximum permissible number of requests, into which a value is written in one shift direction after each entry of the data units associated with an accepted request into the buffer memory (IBUF), and which is cleared again in the opposite shift direction after the data units associated with a request and stored in the buffer memory (IBUF) are forwarded, and in that, from selected storage locations of the register (SREG) which indicate in each case the entry of a predetermined lower number of requests as a limit value, signals (RS) with the respective stored values are supplied to a selection switch (MUX), by means of which one of the signals can be switched through to the output thereof as an internal control signal (URON).

10. Circuit layout according to one of Claims 6 to 9, characterized in that the buffer memory (IBUF) is designed as a transit memory which is coupled to mutually independently operating controllers (OCTR, CBU) for forwarding stored data units and for entering further data units.

## Revendications

1. Procédé de commande de la transmission de données entre un module d'entrée/sortie parmi plusieurs modules d'entrée/sortie (M1 à Mn), raccordés à un système de lignes (Z-BUS), et une autre unité d'une installation de traitement de données, selon lequel des demandes de rangs de priorité différents sont présentées par les divers modules d'entrée/ sortie (M1 à Mn) à un dispositif central de commande (ZCU), qui est relié au système commun de lignes Z-BUS et qui exécute également la transmission des données (DAT) et des informations de commande (BPAR, PAR, ADR), associées à une demande, les unités de données à transmettre étant introduites, après qu'une demande a été acceptée, dans une mémoire tampon (IBUF) du dispositif central de commande (ZCU), qui a une capacité de mémoire, qui correspond au volume de données d'un nombre maximum prédéterminé de demandes, caractérisé par le fait
qu'après l'introduction des unités de données pour un nombre prédéterminé plus petit de demandes en tant que valeur limite, seules encore des demandes supplémentaires de rang de priorité maximum sont acceptées par le dispositif central de commande (ZCU) jusqu'à ce que soit atteint le nombre maximum admissible de demandes, alors que l'on rejette des demandes d'un rang de priorité plus bas jusqu'à ce que l'on repasse sous la valeur limite prédéterminée, par retransmission des unités de données associées à une demande acceptée et mémorisées dans la mémoire tampon (IBUF).

2. Procédé suivant la revendication 1, caractérisé par le fait que dans le cas où on utilise des lignes individuelles de transmission de demandes pour chaque rang de priorité, on suspend le contrôle des lignes de transmission de demandes de rangs de priorités plus bas après que la valeur limite a été atteinte.

3. Procédé suivant la revendication 1, caractérisé par le fait que, dans le cas où on utilise des lignes communes de transmission de demandes (AR), on fixe le rang de priorité d'une demande sur la base de signaux caractéristiques particuliers (UR) dans l'information de commande (BPAR) transmise après l'acceptation préalable de chaque demande, et, en fonction de cela, on accepte ou on rejette définitivement la demande.

4. Procédé suivant l'une des revendications 1 à 3, caractérisé par le fait que parallèlement à l'introduction des unités de données associées à une demande acceptée, on mémorise dans la mémoire tampon (IBUF) un signal de validité (VAL) et un signal de commande (EOC) servant à caractériser la dernière unité de données de la demande .

5. Procédé suivant la revendication 4, caractérisé par le fait que l'on commence la retransmission des unités de données mémorisées dans la mémoire tampon (IBUF), dès qu'au moins les unités de données associées à une demande acceptée sont complètement présentes dans la mémoire.

6. Montage de commande de la transmission de données (DAT) et d'informations de commande (BPAR, PAR, ADR) entre un module d'entrée/sortie parmi plusieurs modules d'entrée/sortie (M1 à Mn) et une autre unité d'une installation de traitement de données, comportant un système de lignes (Z-BUS), auquel sont raccordés un dispositif central de commande (ZCU) et les modules d'entrée/sortie (M1 à Mn), qui sont reliés au dispositif central de commande (ZCU) par l'intermédiaire de lignes de transmission de demandes destiné à présenter des demandes de rangs de priorité différents, et comportant une mémoire tampon (IBUF), qui est prévue dans le dispositif central de commande (ZCU) pour la mémorisation des unités de données associées à une demande acceptée et qui a une capacité de mémoire, qui correspond au volume de données d'un nombre maximum prédéterminé de demandes, caractérisé par le fait que dans le dispositif central de commande (ZCU) est prévu un circuit (SE) destiné à produire un signal de commande interne (URON), qui, après mémorisation des unités de données, peut être positionné en tant que valeur limite, pour un nombre prédéterminé plus petit de demandes et peut être à nouveau ramené à l'état initial après passage sous ce nombre prédéterminé par suite de la retransmission d'unités de données mémorisées, et au circuit (SE) est couplé un dispositif (CBU) destiné à préparer des signaux de commande (CS) pour les modules d'entrée/sortie, par lesquels, lorsque le signal interne de commande est positionné (URON=1), l'acceptation de demandes de rang de priorité maximum jusqu'à ce que soit atteint le nombre maximum admissible de demandes, ou le rejet de demandes de rang de priorité plus bas, peut être communiqué.

7. Montage suivant la revendication 6, caractérisé par le fait que, dans le cas d'utilisation d'un nombre de lignes individuelles de transmission de demandes, qui correspond au nombre des rangs de priorité différents, le dispositif (CBU) destiné à préparer des signaux de commande (CS) comporte des moyens particuliers qui sont destinés à exploiter les lignes de transmission de demandes ayant le même rang de priorité, et dont les moyens destinés à exploiter les lignes de transmission de demandes de rangs de priorité plus bas sont bloqués lorsque le signal interne de commande est positionné (URON=1).

8. Montage suivant la revendication 6, caractérisé par le fait que dans le cas de l'utilisation de lignes communes de transmission de demandes par les divers modules d'entrée/sortie (par exemple Mn), des signaux caractéristiques particuliers (UR) destinés à la fixation des rangs de priorité différents d'une demande dans l'information de commande (BPAR) transmise après acceptation préalable de chaque demande, peuvent être transmis au dispositif (CBU) destiné à préparer des signaux de commande (CS), et le dispositif (CBU) comporte des moyens, qui sont destinés à exploiter les signaux caractéristiques transmis (UR), à partir desquels les signaux de commande (CS) prévus pour l'acceptation définitive ou le rejet de demandes, peuvent être obtenus en fonction de l'état du signal de commande interne (URON).

9. Montage suivant l'une des revendications 6 à 8, caractérisé par le fait que le circuit (SE) destiné à produire le signal interne de commande (URON) comporte un registre à décalage (SREG) comportant un certain nombre, qui correspond au nombre maximum admissible de demandes, d'emplacements de mémoire dans lesquels une valeur est enregistrée, après chaque introduction des unités de données associées à une demande acceptée dans la partie tampon (IBUF), dans un sens de décalage, et est à nouveau effacée, après retransmission des unités de données associées à une demande et mémorisée dans la mémoire tampon (IBUF), dans le sens de décalage inverse, et que des signaux (RS) ayant les valeurs respectivement mémorisées sont envoyés, à partir d'emplacements de mémoire sélectionnés du registre (SREG), qui indiquent l'entrée d'un nombre prédéterminé plus petit de demandes que la valeur limite, à un commutateur de sélection (MUX), de la sortie duquel l'un des signaux peut être transmis en tant que signal de commande interne (URON).

10. Montage suivant l'une des revendications 6 à 9, caractérisé par le fait que la mémoire tampon (IBUF) est sous la forme d'une mémoire circulante, qui est couplée à des unités de commande (OCTR,CBU), qui fonctionnent indépendamment l'une de l'autre, pour la retransmission d'unités de données mémorisées et pour l'introduction d'autres unités de données.
